# EUROPEAN PATENT APPLICATION

(11) **EP 1 137 202 A2**
(43) Date of publication of application: **26.09.2001**
(21) Application number: 01302004.5
(22) Date of filing: 05.03.2001
(51) Int. Cl.: H04B 7/26

(54) **High speed data communication system**

(30) Priority: 24.03.2000 JP 2000084517
(71) Applicant: ALPS ELECTRIC CO., LTD., Ota-ku Tokyo 145 (JP)
(72) Inventor: Izumi, Hideo, Alps Electric Co., Ltd., Tokyo 145 (JP); Forde, Brian, Silicon & Software Systems, Leopardstown, Dublin 18 (IE); Conolly, Bronagh, Silicon & Software Systems, Leopardstown, Dublin 18 (IE); Qusack, Martin, Silicon & Software Systems, Leopardstown, Dublin 18 (IE)
(74) Representative: Kensett, John Hinton

(57) **Abstract**

A high speed data communication system for performing TDMA/TDD-system data communication between selected two transmitting/receiving devices. Each of the transmitting/receiving devices uses two general DECT data modules as transmission data and reception data processing units, allows the data modules to perform different data processes, assigns two slots which are not successive, processes transmission data and reception data at a data processing speed higher than a data processing speed of the single data module, and selects the slots in different channels.

## Description

### BACKGROUND OF THE INVENTION

### Field of the Invention

The present invention relates to a high speed data communication system and, more particularly, a high speed data communication system in which when data communication in the TDMA (Time Division Multiple Access) /TDD (Time Division Duplex) system is performed between transmitting/receiving devices, high speed data communication is performed by using two data modules for each of the transmitting/receiving devices.

### Description of the Related Art

Generally, as a system for performing simultaneous communications among a plurality of users by using the TDMA system, the PHS (Personal Handyphone System) is practically used in Japan. As a system corresponding to the PHS, in Europe, Africa, the Near and Middle East, South America, Oceania, China, India, and the like, the DECT (Digital Enhanced Cordless Telecommunication) system is used in a wide range.

The DECT system relates to a standard radio communication system common to Europe set by the ETSI (European Telecommunication Standard Institute), and can transmit not only a voice signal but also data. The frequency band used ranges from 1.88 to 1.89 GHz in Europe, from 1.91 to 1.93 GHz in South America, and 1.90 to 1.92 GHz in China, and has ten channels. Time division multiplex transmission of 12 slots is performed for transmission and reception per channel.

In the DECT system, the RS-232C/UART (Universal Ansynchronous Receiver Transmitter, UART) (conformed with the IEEE) serial interface is mounted on each transmitting/receiving device. In the case of performing data communication (telephone conversation or speech), each transmitting/receiving device converts transmission serial data (speech information) to a transmission coding code determined by the DECT. When a predetermined transmission slot arrives, the transmitting/receiving device transmits it as an RF (radio frequency) signal to a transmitting/receiving device on the other party side. On the other hand, when a predetermined reception slot arrives and an RF (radio frequency) signal is received from the transmitting/receiving device on the other party side, the RF (radio frequency) signal is demodulated, thereby obtaining reception serial data (speech information).

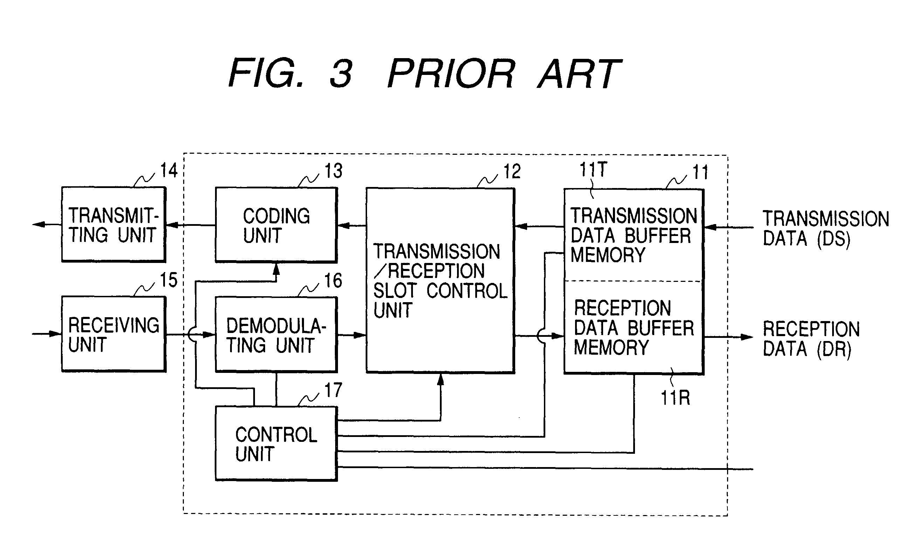

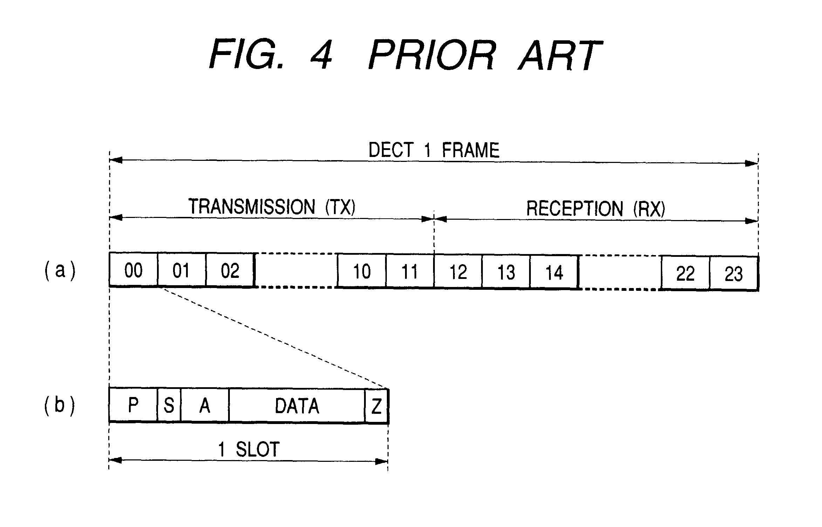

Fig. 3 is a block diagram showing an example of the configuration of a main portion of each transmitting/receiving device used in the DECT system. Figs. 4A and 4B are explanatory diagrams each showing the format of coded data used in the DECT system and illustrating the format of one frame in one channel.

As shown in Fig. 3, a transmitting/receiving device has a data storing unit 11, a transmission/reception slot control unit 12, a coding unit 13, a transmitting unit 14, a receiving unit 15, a demodulating unit 16, and a control unit 17. In this case, the data storing unit 11 is constructed by a transmission data buffer memory 11T and a reception data buffer memory 11R.

The transmission/reception slot control unit 12 has a transmission data signal input terminal connected to the transmission data buffer memory 11T and a reception data output terminal connected to the reception data buffer memory 11R. The transmission data buffer memory 11T and reception data buffer memory 11R are connected to a data processing unit (not shown) via a data sequence converting unit and an interface (both not shown) . The coding unit 13 has an input terminal connected to a transmission data signal output terminal of the transmission/reception slot control unit 12 and an output terminal connected to an input terminal of the transmitting unit 14. The demodulating unit 16 has an input terminal connected to an output terminal of the receiving unit 15 and an output terminal connected to the reception data input terminal of the transmission/reception slot control unit 12. An output terminal of the transmitting unit 14 and an input terminal of the receiving unit 15 are connected to a transmission/reception antenna (not shown).

In this case, as shown in Fig. 4A, one frame of coded data in the DECT system is constructed by 12 slots from 00 to 11 assigned for transmission (TX) and 12 slots from 12 to 23 assigned for reception (RX). Time assigned to each of the transmission (TX) and reception (RX) is 5 millisecond (ms).

As shown in Fig. 4B, data of each slot has a synchronization preamble P for setting idling time for establishing synchronization, a synchronization word S indicating that the data is data coded in the DECT, an identification code A indicative of an ID code for specifying the other communication party and other control code, data DATA as communication data, and an error bit Z for making a parity check.

In the DECT system, when telephone conversation is made between one transmitting/receiving device (called a master device for convenience) and another one of transmitting/receiving devices (called slave devices for convenience), a link setup (speech permission) signal is exchanged just before the telephone conversation, coincidence between the ID code on the other party side and the ID code stored in the device itself is confirmed and, just after the exchange, the devices enter a speech mode. Just after completion of the speech mode between the master device and any one of the slave devices, a link release (speech end) signal is exchanged to thereby release the link. During the link setup signal and the link release signal are exchanged, the master device and the any one of the slave devices cannot perform communication.

In such the transmitting/receiving device in the DECT system, usually, a DECT data module is used for a construction portion (surrounded by dotted lines) including the data storing unit 11, transmission/reception slot control unit 12, coding unit 13, demodulating unit 16, and control unit 17. The DECT data module is a general one for processing data of one packet at a processing speed of 32 KBPS at the maximum.

Recently, higher communication speed is demanded to increase the data communication capacity for data communication. In the case of using a general DECT data module for processing data of one packet at the processing speed of 32 KBPS at the maximum, it is difficult to meet such a demand. It is indispensable to use a DECT data module for processing one-packet data at the processing speed of 64 KBPS at the maximum. However, a general DECT data module for processing one-packet data at the processing speed of 64 KBPS at the maximum does not exist. Consequently, a dedicated DECT data module capable of performing a high speed data process has to be used. Although a transmitting/receiving device having a DECT data module capable of processing data of two packets at the processing speed of substantially 64 KBPS at the maximum by assigning two successive slots in the same channel has been proposed, such a dedicated DECT data module is very expensive. The manufacturing cost of the transmitting/receiving device cannot but increase by the amount.

The proposed known transmitting/receiving device uses two successive slots in the same channel and performs a substantial high-speed data communication by using two-packet data. When one of the two successive slots is influenced by an interfering wave, and one-packet data in the influenced slot becomes unable to be received, even if one-packet data on the slot side which is not influenced by the interfering wave can be received normally, since data is normally received only after two-packet data in two slots is received, the received data becomes invalid. It is therefore necessary to change the reception channel and receive two-packet data again.

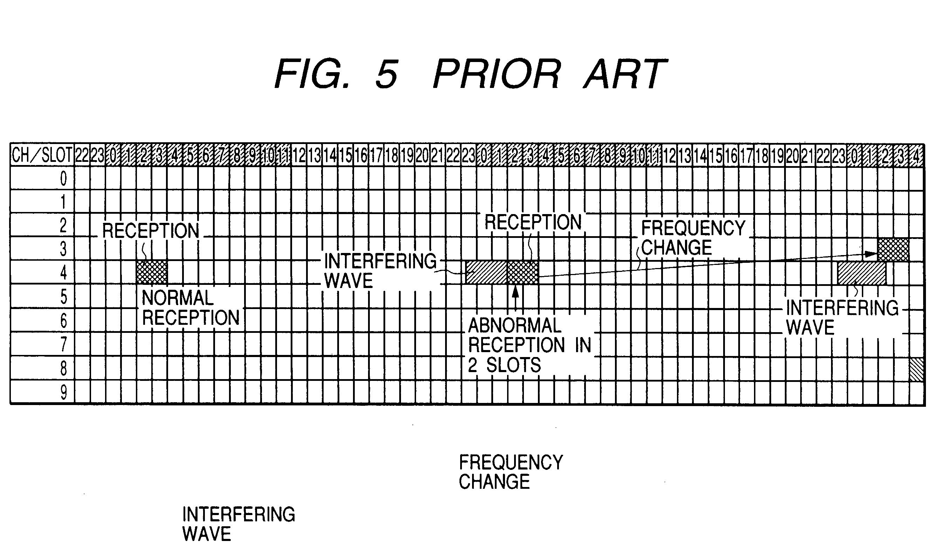

Fig. 5 is an explanatory diagram showing a state where data can be received or not with respect to the case where an influence of the interfering wave is exerted and the case where an influence of the interfering wave is not exerted in the proposed known transmitting/receiving device.

In Fig. 5, the horizontal axis denotes time, numerals shown laterally in the uppermost row in Fig. 5 indicate slot numbers, and numerals shown vertically in the left column in Fig. 5 indicate channel numbers.

As shown in Fig. 5, when two successive slots (slots 2 and 3 in the example of Fig. 5) in a reception channel (channel 4 in the example of Fig. 5) are not influenced by an interfering wave in the first frame, two-packet data is normally received from the slots 2 and 3 and is used as valid data. On the contrary, in the next frame, when the slot 2 in the successive slots 2 and 3 in the channel 4 is influenced by the interfering wave, one-packet data using the slot 2 influenced by the interfering wave cannot be normally received. Consequently, even if the slot 3 is not influenced by the interfering wave, since two-packet data cannot be normally received by the successive slots 2 and 3, the two-packet data cannot be used as valid data. In the following frame, therefore, the reception channel is changed to another channel (channel 3 in the example of Fig. 5) which is not influenced by the interfering wave, and two-packet data is received again by using successive slots 2 and 3 in the channel 3. Since the successive slots 2 and 3 in the channel 3 are not influenced by the interfering wave, two-packet data can be normally received by using the slots 2 and 3 and used as valid data.

As described above, in the proposed known transmitting/receiving device, when any one of successive two slots is influenced by an interfering wave, one-packet data on the slot side influenced by the interfering wave cannot be normally received, so that the two-packet data cannot be used as valid data. From this point, it cannot be the that data is always efficiently received.

### SUMMARY OF THE INVENTION

The invention has been achieved in consideration of such technical backgrounds and its object is to provide a high speed data communication system in which when any one of two slots is influenced by a interfering wave, packet data on the slot side which is not influenced by the interfering wave can be normally received and used as valid data.

According to an object of the present invention there is provided a high speed data communication system for performing TDMA/TDD-system data communication between selected two transmitting/receiving devices, each of the transmitting/receiving devices uses two data modules as a transmitting data processing unit and a reception data processing unit, allows the data modules to perform different data processes, assigns two slots which are not successive, processes transmission data and reception data at a data processing speed higher than a data processing speed of the single data module, and selects the slots in different channels.

With such a configuration, data processed by one of the two data modules in the transmitting/receiving device is different from that processed by the other data module, and two slots which are not successive are assigned to the two data modules. Consequently, transmission data and reception data can be processed at a data processing speed higher than a data processing speed of a single data module. Since the two slots are selected from different channels, the probability that the two slots are simultaneously influenced by an interfering wave therefore becomes extremely low. Moreover, even when data in one of the slots is influenced by the interfering wave, if the data in the other slot can be normally received, the reception data can be used as valid data. Thus, data can be efficiently received.

An embodiment of the present invention will now be described, by way of example only, with reference to the accompanying drawings, in which:
Fig. 1 is a block diagram showing an embodiment of a transmitting/receiving device used for a high speed data communication system according to the invention and illustrating the configuration of a main portion of the transmitting/receiving device.
Fig. 2 is an explanatory diagram showing a state where data can be received or not with respect to the case where an influence of the interfering wave is not exerted and the case where an influence of the interfering wave is exerted in the transmitting/receiving device shown in Fig. 1.
Fig. 3 is a block diagram showing an example of the configuration of a main portion of a known transmitting/receiving device used in the DECT system.
Fig. 4A and 4B are explanatory diagrams showing a format of coded data used in the DECT system and illustrating a format of one frame in one channel.
Fig. 5 is an explanatory diagram showing a state where data can be received or not with respect to the case where an influence of the interfering wave is not exerted and the case where an influence of the interfering wave is exerted in a known transmitting/receiving device.

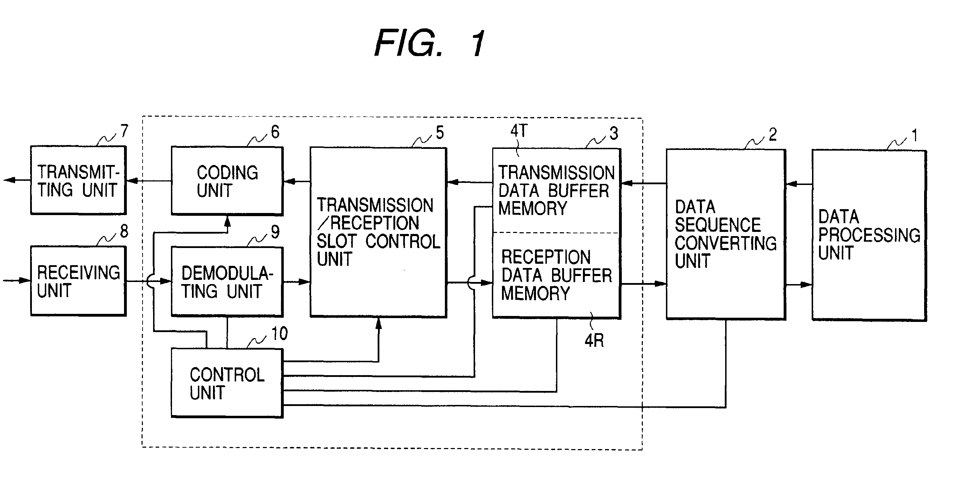

Fig. 1 is a block diagram showing an embodiment of a transmitting/receiving device used for a high speed data communication system according to the invention and showing the configuration of a main portion of the transmitting/receiving device.

As shown in Fig. 1, a transmitting/receiving device has: a data processing unit 1 taking a form of data terminal equipment (DTE) for generating transmission serial data and processing reception serial data; a data sequence converting unit 2 coupled to the data processing unit 1, for rearranging supplied plural serial data by transmitting/receiving devices of other parties and outputting the resultant data; a data storing unit 3 having a transmission data buffer memory 4T and a reception data buffer memory 4R for temporarily storing the supplied plural serial data; a transmission/reception slot control unit 5 for setting assignment of transmission/reception slots with respect to time; a coding unit 6 for coding the transmission serial data to thereby generate transmission coded data in the TMDA/TDD system; a transmitting unit 7 for transmitting the transmission coded data as an RF signal (radio frequency) signal to a transmitting/receiving device on the other party side; a receiving unit 8 for receiving an RF signal transmitted from the transmitting/receiving unit on the other party side and converting the RF signal into a baseband signal; a demodulating unit 9 for demodulating the baseband signal into reception coded data; and a control unit 10 for performing a control over a DECT data module which will be described hereinlater. In this case, the configuration portion (surrounded by dotted lines in Fig. 1) in the transmitting/receiving device, which includes the data storing unit 3, transmission/reception slot control unit 5, coding unit 6, demodulating unit 9, and control unit 10 is constructed by two general DECT data modules, for example, general DECT data modules for processing one-packet data at the processing speed of 32 KBPS at the maximum. The two general DECT data modules process different data.

The data processing unit 1 has a data input terminal and a data output terminal which are connected to a transmission data input terminal and a reception data output terminal of the data sequence converting unit 2, respectively. The data sequence converting unit 2 has a transmission data output terminal connected to a data input terminal of the transmission data buffer memory 4T and a reception data input terminal connected to a data output terminal of the reception data buffer memory 4R. A data output terminal of the transmission data buffer memory 4T is connected to a transmission serial data input terminal of the transmission/reception slot control unit 5. A data input terminal of the reception data buffer memory 4R is connected to a reception serial data output terminal of the transmission/reception slot control unit 5. The transmission/reception slot control unit 5 has a transmission serial data output terminal connected to a transmission serial data input terminal of the coding unit 6 and a reception serial data input terminal connected to a reception coded data output terminal of the demodulating unit 9. The transmitting unit 7 has a transmission coded data input terminal connected to the transmission coded data output terminal of the coding unit 6 and an RF signal output terminal connected to a transmission/reception antenna (not shown). The receiving unit 8 has an RF signal input terminal connected to the transmission/reception antenna, and a baseband signal output terminal connected to a baseband signal input terminal of the demodulating unit 9. The control unit 10 is connected to, mainly, control terminals of the data sequence converting unit 2, transmission data buffer memory 4T, reception data buffer memory 4R, transmission/reception slot control unit 5, coding unit 6, and demodulating unit 9.

The transmitting/receiving device according to the embodiment having the above configuration operates as follows.

In the case of transmitting data, transmission serial data DS is outputted from the data processing unit 1. The transmission serial data DS is supplied to the data sequence converting unit 2 and is rearranged. After that, the resultant data is temporarily stored in the transmission data buffer memory 4T. The transmission/reception slot control unit 5 reads the transmission serial data DS from the transmission data buffer memory 4T so that the transmission serial data DS is transmitted within assigned time of one (for example, a slot 00) of slots 00, 01, ··· ···, 11 for transmission (TX) shown in Fig. 4A, and supplies the read data to the coding unit 6. The coding unit 6 encodes the supplied transmission serial data DS, thereby converting the data to transmission coded data in the TDMA/TDD system, and supplies the obtained transmission coded data to the transmitting unit 7. The transmitting unit 7 frequency-converts the transmission coded data into an RF (radio frequency) signal, thereby generating a transmission RF signal, amplifies the generated transmission RF signal to a predetermined level, and supplies the amplified signal to the transmission/reception antenna (not shown). The data is transmitted from the transmission/reception antenna toward the transmitting/receiving device on the partner side as a communication partner.

In the case of receiving data, when an RF signal transmitted within the assigned time of one (for example, slot 12) of slots 12, 13, ··· ···, 23 for reception (RX) shown in Fig. 4A is received by the transmission/reception antenna, the receiving unit 8 frequency-converts the reception RF signal received by the transmission/reception antenna into a baseband signal, and supplies the derived baseband signal to the demodulating unit 9. The demodulating unit 9 demodulates the baseband signal to thereby reproduce the reception coded data, and supplies the reproduced reception coded data to the transmission/reception slot control unit 5. At this time, the transmission/reception slot control unit 5 converts the supplied reception coded data into reception serial data DR and temporarily stores the converted reception serial data DR into the reception data buffer memory 4R. After that, the reception serial data DR is read from the reception data buffer memory 4R at a timing at which the control unit 10 can perform a process. The read data is supplied via the data sequence converting unit. 2 to the data processing unit 1, and subjected to a predetermined process in the data processing unit 1.

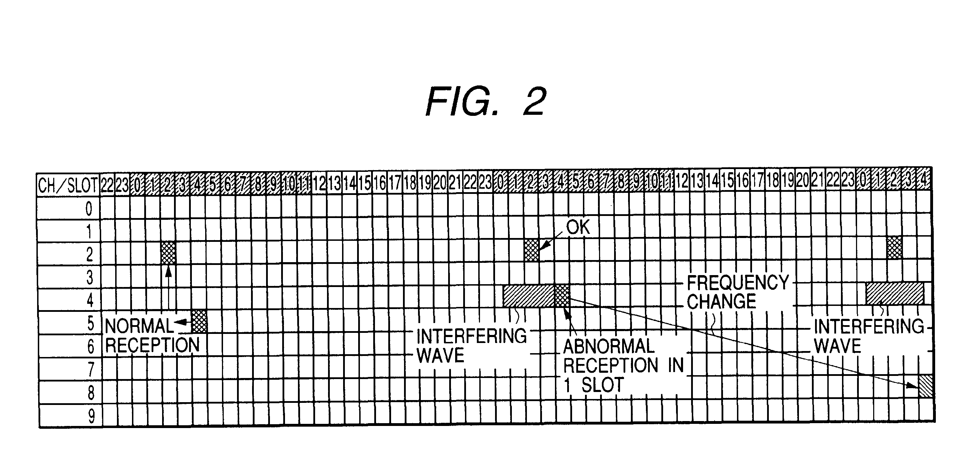

Fig. 2 is an explanatory diagram showing a state where data can be received or not with respect to the case where an influence of the interfering wave is not exerted and the case where an influence of the interfering wave is exerted in the transmitting/receiving device according to the embodiment.

In Fig. 2, the horizontal axis denotes time, numerals shown laterally in the uppermost row in Fig. 2 indicate slot numbers, and numerals shown vertically in the left column in Fig. 5 indicate channel numbers.

Slots 0 to 11 are reception slots of the transmitting/receiving device (transmission slots of the transmitting/receiving device on the other party side), and slots 12 to 23 are transmission slots of the transmitting/receiving device (reception slots of the transmitting/receiving device on the other party side).

By using Fig. 2, an example of a state where data can be received or not in the transmitting/receiving device will now be described.

In the first frame, the transmitting/receiving device assigns a slot 2 in a channel 2 and a slot 4 in a channel 4 as reception data slots in two general DECT data modules. At this time point, as shown in Fig. 2, when both of the slot 2 in the channel 2 and the slot 4 in the channel 4 are not influenced by an interfering wave, two-packet data in the slot 2 in the channel 2 and the slot 4 in the channel 4 is received normally and is used as valid data.

In the next frame, since the data reception in the immediately preceding frame has been valid, the transmitting/receiving device assigns the slot 2 in the channel 2 and the slot 4 in the channel 4 as reception data slots in the two general DECT data modules in a manner similar to the preceding frame. At this time point, as shown in Fig. 2, although the slot 2 in the channel 2 is not influenced by the interfering wave, the slot 4 in the channel 4 is influenced by the interfering wave, one-packet data in the slot 2 in the channel 2 is normally received and is used as valid data. One-packet data in the slot 4 in the channel 4, however, is not normally received and cannot be used as valid data.

In the following frame, therefore, since only the slot 4 in the channel 4 in the immediately preceding frame is influenced by the interfering wave, in order to avoid the slot 4 in the channel 4 influenced by the interfering wave, the transmitting/receiving device changes a carrier signal frequency to change assignment to a slot 4 in a channel 8 as a reception data slot in the two general DECT data modules. On the other hand, the slot 2 in the channel 2 is not influenced by the interfering wave, the slot 2 in the channel 2 is assigned in a manner similar to the immediately preceding frame. At this time point, as shown in Fig. 2, when both the slot 2 in the channel 2 and the slot 4 in the channel 8 are not influenced by the interfering wave, two-packet data is normally received by the slot 2 in the channel 2 and the slot 4 in the channel 8 and is used as valid data. In this case, data received by the slot 4 in the channel 8 is retransmitted data which has not be normally received by the slot 4 in the channel 4 in the immediately preceding frame.

Similarly, when both of two slots assigned to receive data in a frame are not influenced by the interfering wave, in the following frame, the two slots assigned to receive data in the immediately preceding frame are continuously assigned to receive data. When one of two slots assigned to receive data in the immediately preceding frame is influenced by the interfering wave, only the slot in the frame is changed to a slot in another channel. When both of two slots are influenced by the interfering wave, both slots are changed to slots in other channels in the frame.

As described above, in the transmitting/receiving device according to the embodiment, by using two general DECT data modules, the data processing speed can be increased to high speed, for example, processing speed of 64 KBPS at the maximum. Moreover, at the time of receiving two-packet data, different data is received. Consequently, only reception of data in a slot influenced by the interfering wave becomes invalid, but reception of data in another slot is valid. Thus, data is efficiently received.

As described above, according to the invention, data executed by two data modules in transmitting/receiving units is different from each other, and non-successive two slots are assigned for the two data modules. Consequently, transmission data and reception data can be processed at a data processing speed higher than a data processing speed of a single data module. Since two slots in different channels are selected, the probability that the two slots are simultaneously influenced by the interfering wave decreases. Moreover, even if data in one of the slots is influenced by the interfering wave, when data by the other slot can be normally received, the data can be used as valid data. Thus, an effect such that data can be efficiently received is produced.

## Claims

1. A high speed data communication system for performing TDMA/TDD-system data communication between selected two transmitting/receiving devices, wherein each of the transmitting/receiving devices uses two data modules as a transmitting data processing unit and a reception data processing unit, allows the data modules to perform different data processes, assigns two slots which are not successive, processes transmission data and reception data at a data processing speed higher than a data processing speed of the single data module, and selects the slots in different channels.
